# FASCICULE DE BREVET EUROPEEN

(11) **EP 1 201 133 B1**
(45) Date de publication et mention de la délivrance du brevet: **12.10.2005**
(21) Numéro de dépôt: 01402681.9
(22) Date de dépôt: 17.10.2001
(51) Int. Cl.: C08B 30/18, A23C 9/13

(54) **Additif carboné pour fermentations alimentaires et compositions alimentaires le contenant**
Zusatzstoff für die Gärung von Lebensmitteln und diesen enthaltende Lebensmittel
Additive for food fermentations and food compositions containing it

(30) Priorité: 30.10.2000 FR 0013957
(43) Date de publication de la demande: 02.05.2002
(73) Titulaire: Roquette Frères, 62136 Lestrem (FR)
(72) Inventeur: Ostermann, Elsa, 62400 Bethune (FR); Pora, Bernard, 59151 Arleux (FR); Boursier, Bernard, 62138 Violaines (FR); Defretin, Sophie, 62400 Locon (FR)
(74) Mandataire: Boulinguiez, Didier

(56) Documents cités:
- EP-A- 0 667 356
- EP-A- 1 006 128
- WO-A-95/02969
- WO-A-99/27801
- US-A- 5 886 168
- US-B1- 6 248 726

## Description

La présente invention a pour objet un procédé de préparation d'une composition alimentaire fermentée, utilisant un additif carboné pour fermentations ou pour ferments alimentaires, lactiques et/ou bifides, contenant des maltodextrines branchées et des maltodextrines standards.

Les fermentations alimentaires visées par la présente invention sont des fermentations à l'aide de bactéries à Gram positif, parmi lesquelles on retrouve les bactéries lactiques qui se caractérisent par une forte production d'acide lactique, et les bactéries bifides qui sont apparentées aux bactéries lactiques et qui se caractérisent par une fermentation mixte, lactique et acétique.

Les bactéries lactiques comprennent les genres suivants : *Lactobacillus, Lactococcus, Streptococcus, Enterococcus, Leuconostoc, Pediococcus.* Les bactéries bifides sont représentées par le genre *Bifidobacterium*.

On trouve ces bactéries généralement associées à d'autres microorganismes dans de nombreux produits de fermentation naturelle animaux et végétaux : laits fermentés (fromages, yaourts), viandes fermentées (saucisson, jambon), boissons alcoolisées à base de fruits (vins, cidres, bières), légumes et fruits fermentés (choucroute, olives, cornichons), céréales fermentées (différentes variétés de pains), fourrages fermentés (ensilage).

Ces bactéries, que l'on regroupera sous le vocable « ferments alimentaires » sont considérées comme un des groupes bactériens les plus exigeants du point de vue nutritionnel (La technique laitière N°979, 1983 - pp 41-47).

En étudiant différents milieux de croissance pour ferments alimentaires et en particulier les différents produits carbonés utilisables, la Demanderesse a constaté que l'addition de maltodextrines branchées particulières avait, de façon surprenante et inattendue, un effet bénéfique sur la croissance des ferments alimentaires et par conséquent sur la vitesse d'acidification du milieu de croissance. Ceci est particulièrement étonnant puisqu'il est connu que les sources de carbone de faible poids moléculaire comme notamment le lactose sont préférentiellement métabolisées par les bactéries lactiques. Selon l'invention, l'addition de maltodextrines branchées dans le milieu de croissance ou dans le produit à fermenter permet :
- une diminution du temps de latence de la croissance bactérienne,
- une acidification plus rapide avec un gain de temps de fermentation nécessaire à l'obtention d'une valeur de pH de 4,4,
- une population bactérienne 2 à 4 fois plus importante en nombre et présentant une viabilité élevée.

Ce phénomène est tout à fait intéressant dans les fermentations alimentaires notamment du type « yaourt » puisque la Demanderesse a constaté en plus des avantages ci-dessus, une augmentation de la viscosité du yaourt bénéfique pour la rhéologie du produit final. Cette augmentation de viscosité permet d'autre part de réduire avantageusement la teneur en agents texturants dans le produit comme notamment les protéines.

L'invention a donc pour objet un procédé de préparation d'une composition alimentaire fermentée, utilisant un additif carboné pour fermentations ou pour ferments alimentaires caractérisé en ce qu'il comprend des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, et des maltodextrines standards.

On entend par indice de polymolécularité le rapport Mp/Mn sachant que Mp est la masse moléculaire en poids et Mn la masse moléculaire en nombre.

On entend par maltodextrines branchées les maltodextrines décrites dans la demande de brevet FR-A-2.786.775 dont la Demanderesse est titulaire. Ces maltodextrines ont une teneur en liaisons glucosidiques 1→6 supérieure à celle des maltodextrines standards.

Les maltodextrines standards au sens de la présente invention sont classiquement produites par hydrolyse acide ou enzymatique de l'amidon, et sont caractérisées par un pouvoir réducteur exprimé en Dextrose équivalent (ou D.E) inférieur à 20.

Selon une variante préférée de l'invention, les maltodextrines branchées présentent une teneur en sucres réducteurs comprise entre 2 et 5% et un Mn compris entre 2000 et 3000 g/mole.

Avantageusement, l'additif carboné utilisé comprend au moins 0,1% de maltodextrines branchées. Il comprend en outre des maltodextrines standards.

L'additif carboné comprend au moins 0.1, de préférence 2 à 90% et plus préférentiellement encore 5 à 85% en poids de maltodextrines branchées et 0.1 à 99.9%, de préférence 5 à 75% et plus préférentiellement encore 5 à 55% en poids de maltodextrines standards.

En deçà de 0.1% de maltodextrines dans le milieu de fermentation, l'effet positif n'est pas suffisant pour être mis en évidence. Au delà de 30% en poids de maltodextrines dans ledit milieu, on observe un effet néfaste dû à une trop forte pression osmotique.

Selon une variante de l'invention, tout ou partie des maltodextrines branchées sont hydrogénées.

L'additif carboné peut en outre contenir des édulcorants intenses, tels que par exemple l'aspartame ou l'acésulfame K.

L'additif carboné peut être ajouté dans le milieu de fermentation en poudre ou sous forme de pâte, de suspension ou de solution ; seul ou en combinaison avec d'autres produits composant le milieu de fermentation ou avec les ferments.

Les compositions alimentaires fermentées obtenues conformes à l'invention sont caractérisées en ce qu'elles comprennent tout ou partie de l'additif carboné. En effet, la composante maltodextrine, selon qu'elle est branchée, branchée hydrogénée ou standard, n'est essentiellement pas fermentée ou partiellement fermentée et se retrouve donc presque totalement ou en partie dans la composition alimentaire finale. Dans le cas des yaourts ou des laits fermentés, l'additif carboné est incorporé directement au lait à fermenter. Les compositions alimentaires fermentées visées par la présente invention peuvent être d'origine animale ou végétale, et peuvent également être destinées à l'alimentation animale, comme les compositions d'ensilage notamment.

La présente invention a pour objet un procédé de préparation d'une composition alimentaire fermentée caractérisée en ce que l'on met en oeuvre l'additif carboné [conforme à l'invention] décrit ci-dessus.

Il est ainsi possible d'obtenir, avec de meilleurs rendements de fermentation, divers produits alimentaires dans lesquels la présence de l'additif carboné apporte en outre d'autres avantages technologiques et organoleptiques. En particulier, les maltodextrines branchées utilisées conformément à l'invention apportent un effet fibre aux produits alimentaires. La Demanderesse a en effet montré que ces maltodextrines favorisaient le développement de micro-organismes bénéfiques pour la santé de l'homme et des animaux, tels que les flores bifidogènes, lactiques... On parle alors d'effet prébiotique des maltodextrines branchées. Ainsi, la composition alimentaire comportant l'additif carboné aura de plus l'avantage d'être bifidogène. L'additif peut ainsi favoriser la croissance in vivo des flores lactiques humaines ou animales. D'autres avantages apparaîtront clairement à la lecture des exemples qui suivent et de la figure unique qui s'y rapporte, qui se veulent illustratifs et non limitatifs.

Bien entendu, les additifs carbonés peuvent également être associés aux ferments alimentaires eux-mêmes, ce qui a pour avantage d'améliorer leur stabilité à la conservation ou au séchage.

### Exemple en dehors de l'invention 1. Préparation de spécialités laitières brassées.

L'objectif est de mettre en évidence l'influence de l'additif carboné sur la texture, le goût et la cinétique de fermentation de spécialités laitières sucrées à 0% de matière grasse. Pour cela, La Demanderesse a substitué totalement du saccharose par des maltodextrines branchées et des édulcorants de synthèse, avec différents ferments :
- un ferment « traditionnel », mélange équilibré des souches habituelles du yaourt (*Streptococcus thermophilus, Lactobacillus delbruekii sp. bulgaricus*)
- un ferment « moderne » constitué des mêmes souches après adaptation aux attentes actuelles du consommateur (acidité moindre, onctuosité accrue),
- un ferment bifidogène, constitué uniquement de *Bifidobacterium lactis.*

On prépare des yaourts selon le protocole et la formulation ci-dessous.

| Ingrédient | Yaourt témoin | Yaourt selon l'invention |
|---|---|---|
| **Eau** | 81% | 80,96% |
| **Lait écrémé en poudre** | 9% | 9% |
| **Saccharose** | 10% | |
| **Maltodextrines branchées*** | | 10% |
| **Aspartame** | | 0,024% |
| **Acésulfame K** | | 0,016% |
| **Ferments (voir ci-dessous)** | | |

| | | |
|---|---|---|
| *Les maltodextrines branchées utilisées présentent les caractéristiques suivantes : Dextrose équivalent : 6 Matière sèche : >95% Masse moléculaire Mn : 2900 Valeur calorique : 2 kcal /g | | |

Les ferments sont fournis par la société CHR HANSEN sous forme lyophilisée, destinée à un ensemencement direct. La dose de ferments à utiliser dépend du type de ferment. On utilise ainsi environ 4,8g de ferments traditionnels ou modernes pour 100 litres de lait, et 2g pour 100 litres de lait avec le ferment bifide.
- ferment traditionnel : réf. YC-380
- ferment moderne : réf. YC-X11
- ferment bifide : réf. BB-12

### Protocole :

- hydrater la poudre de lait écrémé dans l'eau pendant 15 minutes sous agitation (800 rpm).
- Ajouter le saccharose ou les maltodextrines branchées, et agiter pendant 7 minutes à 500 rpm.
- Pasteuriser la solution dans un serpentin plongé dans un bain-marie à ébullition, temps de séjour du lait dans le serpentin : 7 minutes.
- Laisser refroidir le lait à 44°C. Ajouter alors les édulcorants préalablement dilués à 10% dans de l'eau stérile et les ferments dilués. Pour les ferments traditionnels et modernes, qui comportent un mélange de souches, il est important de diluer au moins 50% du lyophilisat dans du lait pasteurisé quelques minutes avant l'ensemencement, afin de s'assurer que l'on prélève les bonnes proportions de chaque souche.
- Placer le lait dans une étuve à 44°C et suivre le pH jusqu'à une valeur de 4,4.
- Arrêter la fermentation : brasser le yaourt 1 minute à 500 rpm et le verser dans des pots en verre, stockés à 4°C.

Les paramètres mesurés sur les yaourts sont les suivants : viscosité Brookfield après fermentation, avant et après brassage, acidité en degrés Dornic avant et après fermentation, acidification mesurée par suivi de pH au cours de la fermentation. Une analyse sensorielle dans les jours qui suivent la fabrication permet d'évaluer la perception de la texture et de la saveur obtenue. Les mesures 1 jour après la fabrication sont reprises dans le tableau suivant :

| | Yaourt témoin | Yaourt selon l'invention |
|---|---|---|
| Ferment traditionnel | | |
| Viscosité initiale (mPa.s) | 10 | 20 |
| Viscosité après fermentation (mPa.s) | 11000 | 14000 |
| Viscosité après brassage (mPa.s) | 290 | 410 |
| Acidité initiale (°D) | 16 | 16.5 |
| Acidité finale (°D) | 73 | 86 |

| Ferment moderne | | |
|---|---|---|
| Viscosité après fermentation (mPa.s) | 18000 | 20000 |
| Viscosité après brassage (mPa.s) | 440 | 590 |
| Acidité initiale (°D) | 14.5 | 12.5 |
| Acidité finale (°D) | 80 | 84 |

| Ferment bifide | | |
|---|---|---|
| Viscosité après fermentation (mPa.s) | 19000 | 26000 |
| Viscosité après brassage (mPa.s) | 560 | 870 |
| Acidité initiale (°D) | 13 | 15 |
| Acidité finale (°D) | 101 | 86.5 |

On constate une augmentation importante de la viscosité des yaourts, quel que soit le ferment utilisé. La mesure de viscosité initiale montre que les propriétés de viscosité des maltodextrines branchées elles-mêmes ne suffisent pas à expliquer les écarts constatés.

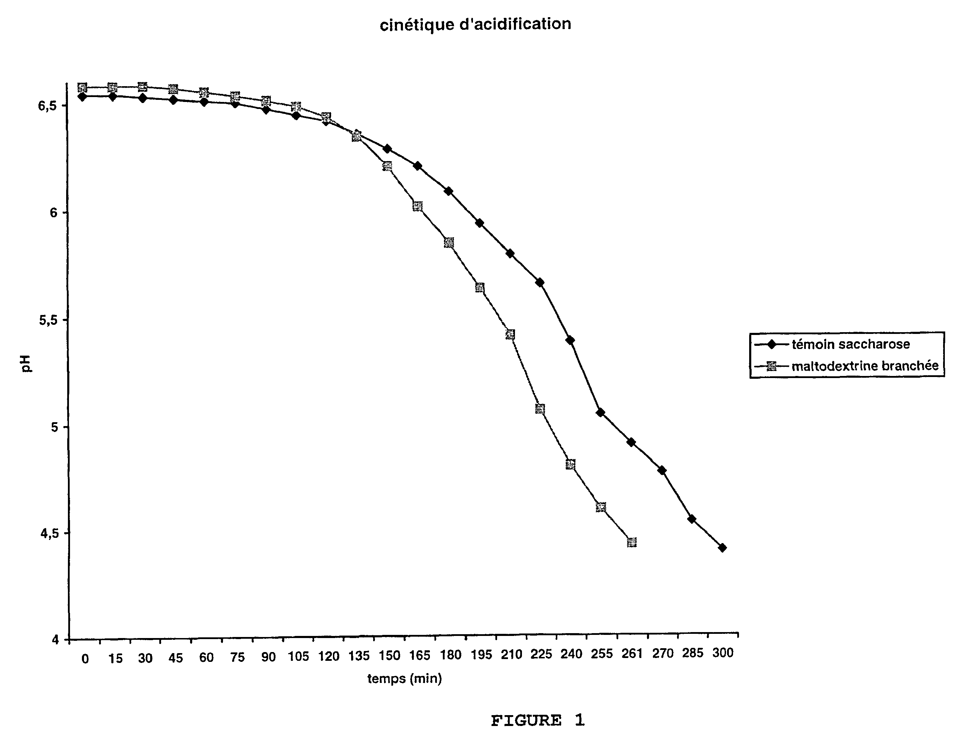

Une cinétique d'acidification est représentée sur le graphe correspondant à la figure 1, qui montre l'effet positif des maltodextrines branchées sur la vitesse d'acidification.

### Exemple en dehors de l'invention 2. Etude microbiologique

On prépare un yaourt dans les mêmes conditions que l'exemple 1, en utilisant les ferments traditionnels et on suit la fermentation par mesure de la variation d'impédance du milieu au cours du temps d'incubation (BACTOMETER®, BIOMERIEUX) et par la détermination quantitative et qualitative de la population microbienne par cytométrie de flux (CHEMFLOW®, CHEMUNEX). Le système BACTOMETER® est un système de détection microbienne rapide, fiable et sensible et entièrement automatisé, reposant sur les principes de la microbiologie par impédance. Il est conçu pour détecter les changements d'impédance résultant de l'activité métabolique des microorganismes en croissance. Le temps de détection mesuré est fonction à la fois de la cinétique de croissance, du temps de latence et de la concentration en microorganismes d'un échantillon donné. Les résultats sont exprimés en TD(temps de détection). L'influence de différents saccharides sur la croissance des ferments lactiques est étudiée.

Le milieu de croissance est d'un volume de 1ml, composé de 9% de lait, 10% de saccharose et/ou 10% de saccharides à étudier. Le lait est préparé par réhydratation dans de l'eau stérile, il n'est pas pasteurisé. Les saccharides à étudier sont stérilisés par filtration.

La suspension de ferments lactiques est préparée dans de l'eau stérile afin d'obtenir une population initiale de 2 10⁶ UFC/ml de milieu lacté.

L'incubation se fait à 44°C pendant 24 heures. La variation d'impédance du milieu est mesurée en continu et est traduite en % de variation.

Le milieu négatif est un milieu de même composition que le milieu étudié mais il est non ensemencé.

Les résultats sont consignés dans le tableau ci-après.

| **Saccharide ajouté** | **Concentration** **(%)** | **Temps de détection en heures** |
|---|---|---|
| aucun | | 4,6 |
| saccharose | 10 | 4,6 |
| glucose | 10 | 14,8 |
| Maltodextrines branchées | 10 | 4,1 |

Cette mesure vise à montrer que l'effet positif des maltodextrines branchées n'est pas relatif à une diminution de la pression osmotique puisque le temps de détection est identique au témoin en l'absence de produit carboné additionnel au lactose du lait.

Une diminution du temps de détection correspondant à une diminution du temps de latence est observée pour les essais où le saccharose a été substitué par les maltodextrines branchées.

### Exemple en dehors de l'invention 3 : détermination de la concentration bactérienne.

Les ferments lactiques ont été mis en oeuvre sur les milieux décrits dans l'exemple précédent (lait 9% et saccharose 10%, ou maltodextrines branchées 10%).

L'incubation a été faite à 44°C en réacteur de 2 litres avec suivi cinétique de l'acidification. Des prélèvements ont été effectués au cours de la fermentation afin de déterminer la concentration bactérienne totale et la viabilité de cette population grâce à l'analyseur CHEMFLOW.

Les fermentations ont été stoppées dès que le pH a atteint une valeur de 4,4.

Le tableau suivant indique les concentrations en cellules totales et les concentrations en cellules vivantes, le rapport des deux valeurs donnant la viabilité cellulaire. Les analyses des derniers prélèvements correspondant aux fins de fermentation, ont été effectués après brassage du yaourt. Les valeurs sont exprimées en cellules comptées par ml de moût.

| Temps (heures) | saccharose | Maltodextrines branchées |
|---|---|---|
| **Cellules totales** /Cellules vivantes | | |
| 0 | **1.89 10**^{**8**} | **1.67 10**^{**8**} |
| | 1.46 10⁸ | 1.33 10⁸ |
| 1 | **3.28 10**^{**8**} | **3.64 10**^{**8**} |
| | 2.61 10⁸ | 2.98 10⁸ |
| 2 | **3.14 10**^{**8**} | **6.24 10**^{**8**} |
| | 2.54 10⁸ | 4.88 10⁸ |
| 3 | **5.81 10**^{**8**} | **12.9 10**^{**8**} |
| | 4.17 10⁸ | 10.5 10⁸ |
| 4 | **7.8 10**^{**8**} | **33.8 10**^{**8**} |
| | 6.3 10⁸ | 23.3 10⁸ |
| 4,25 | - | **34.1 10**^{**8**} |
| | | 22.2 10⁸ |
| | | (soit 65% à pH=4.4) |
| 5 | **10.5 10**^{**8**} | - |
| | 7.2 10⁸ | |
| | (soit 68% à pH=4.4) | |

Les viabilités pour chacun des milieux sont identiques.

Les populations totales et vivantes sont plus élevées pour les maltodextrines branchées que pour le saccharose.

Selon le saccharide ajouté, les concentrations cellulaires viables sont plus concentrées que le témoin saccharose, les maltodextrines branchées étant les saccharides les plus activateurs de croissance.

### Exemple : variation des teneurs en saccharides

Des essais ont été réalisés dans les mêmes conditions que précédemment, mais avec mélange de maltodextrines branchées et maltodextrines standards, ainsi que variation des teneurs en maltodextrines.

La maltodextrine standard utilisée est la GLUCIDEX®6 commercialisée par la Demanderesse.

| **Maltodextrine branchée** **(%)** | **Maltodextrine standard** **(%)** | **Temps de détection** **(h)** |
|---|---|---|
| 6 | 4 | 4.1 |
| 10 | 0 | 4.2 |

L'utilisation de mélanges de maltodextrines branchées et standards permet de conserver l'effet positif de la maltodextrine branchée sur la fermentation lactique tout en ajoutant une propriété nutritionnelle au produit laitier (effet fibre). Les maltodextrines standards semblent avoir un effet de synergie avec les maltodextrines branchées.
En conclusion, l'additif carboné apporte aux yaourts plusieurs bénéfices majeurs :
- enrichissement en fibres
- augmentation de l'onctuosité, qui autorise des économies en protéines laitières
- augmentation de la vitesse d'acidification
- et augmentation de la concentration microbienne.

## Revendications

1. Procédé de préparation d'une composition alimentaire fermentée, **caractérisé en ce que** l'on met en oeuvre au cours de la fermentation un additif carboné comprenant des maltodextrines branchées présentant entre 15 et 35% de liaisons glucosidiques 1->6, une teneur en sucres réducteurs inférieure à 20%, un indice de polymolécularité inférieur à 5 et une masse moléculaire moyenne en nombre Mn au plus égale à 4500 g/mole, et des maltodextrines standards.

2. Procédé selon la revendication 1, **caractérisé en ce que** ledit additif carboné comprend au moins 0,1% en poids de maltodextrines branchées.

3. Procédé selon l'une ou l'autre des revendications 1 et 2, **caractérisé en ce que** lesdites maltodextrines branchées présentent une teneur en sucres réducteurs comprise entre 2 et 5% et un Mn compris entre 2000 et 3000 g/mole.

4. Procédé selon l'une quelconque des revendications 1 à 3, **caractérisé en ce que** ledit additif comprend 2 à 90% de maltodextrines branchées et 5 à 75% de maltodextrines standard.

5. Procédé selon l'une quelconque des revendications 1 à 4, **caractérisé en ce que** tout ou partie desdites maltodextrines branchées sont hydrogénées.

6. Procédé selon l'une quelconque des revendications 1 à 5, **caractérisé en ce que** ladite composition alimentaire fermentée est une spécialité laitière.

7. Procédé selon l'une quelconque des revendications 1 à 6, **caractérisé en ce que** ladite composition alimentaire est un lait fermenté.

## Patentansprüche

1. Verfahren zur Herstellung einer gegärten Nahrungszusammensetzung, **dadurch gekennzeichnet, daß** im Verlauf der Gärung ein Kohlenstoffadditiv eingesetzt wird, welches verzweigte Maltodextrine, die 15 bis 35% 1->6-glucosidische Bindungen, einen Gehalt an reduzierendem Zucker von weniger als 20%, einen Polymolekular-Index von weniger als 5 und ein Zahlenmittel des Molekulargewichts Mn von gleich oder weniger als 4.500 g/Mol aufweisen, sowie Standard-Maltodextrine umfaßt.

2. Verfahren gemäß Anspruch 1, **dadurch gekennzeichnet, daß** das Kohlenstoffadditiv mindestens 0,1 Gew.-% verzweigte Maltodextrine umfaßt.

3. Verfahren gemäß Anspruch 1 oder 2, **dadurch gekennzeichnet, daß** die verzweigten Maltodextrine einen Gehalt an reduzierendem Zucker von 2 bis 5% und einen Mn von 2.000 bis 3.000 g/Mol aufweisen.

4. Verfahren gemäß irgendeinem der Ansprüche 1 bis 3, **dadurch gekennzeichnet, daß** das Additiv 2 bis 90% verzweigte Maltodextrine und 5 bis 75% Standard-Maltodextrine umfaßt.

5. Verfahren gemäß irgendeinem der Ansprüche 1 bis 4, **dadurch gekennzeichnet, daß** alle oder ein Teil der verzweigten Maltodextrine hydriert sind.

6. Verfahren gemäß irgendeinem der Ansprüche 1 bis 5, **dadurch gekennzeichnet, daß** die gegärte Nahrungszusammensetzung ein Molkereispezialprodukt ist.

7. Verfahren gemäß irgendeinem der Ansprüche 1 bis 6, **dadurch gekennzeichnet, daß** die Nahrungszusammensetzung eine gegärte Milch ist.

## Claims

1. Process for preparing a fermented food composition, **characterized in that** a carbon-containing additive comprising branched maltodextrins having between 15 and 35% of 1->6 glucosidic bonds, a reducing sugars content less than 20%, a polymolecularity index less than 5 and a number average molecular mass Mn equal to at most 4,500 g/mole, and standard maltodextrins are used during the fermentation.

2. Process according to claim 1, **characterized in that** said carbon-containing additive comprises at least 0.1% by weight of branched maltodextrins.

3. Process according to claim 1 or claim 2, **characterized in that** the said branched maltodextrins have a reducing sugars content between 2 and 5% and an Mn between 2,000 and 3,000 g/mole.

4. Process according to anyone of claims 1-3, **characterized in that** said additive comprises 2 to 90% by weight of branched maltodextrins, and 5 to 75% by weight of standard maltodextrins.

5. Process according to anyone of claims 1-4, **characterized in that** all or a part of the said branched maltodextrins are hydrogenated.

6. Process according to anyone of claims 1-5, **characterized in that**, said fermented food composition is a diary specialty.

7. Process according to anyone of claims 1-6, **characterized in that**, said fermented food composition is a fermented milk.
